# EUROPEAN PATENT SPECIFICATION

(11) **EP 4 342 806 B1**
(45) Date of publication and mention of the grant of the patent: **13.11.2024**
(21) Application number: 23197964.2
(22) Date of filing: 18.09.2023
(51) Int. Cl.: B65B 51/14, B65B 59/00, B65B 59/04, B29C 65/00, B65B 9/04

(54) **SLAT EXCHANGE SYSTEM IN THERMO-WELDING MACHINES HAVING CELLS OR ALVEOLAR CAVITIES**
LAMELLENWECHSELSYSTEM IN THERMOSCHWEISSMASCHINEN MIT ZELLEN ODER ALVEOLAREN HOHLRÄUMEN
SYSTÈME D'ÉCHANGE DE LATTES DANS DES MACHINES DE THERMOSOUDAGE AYANT DES CELLULES OU DES CAVITÉS ALVÉOLAIRES

(30) Priority: 23.09.2022 IT 202200019590
(43) Date of publication of application: 27.03.2024
(73) Proprietor: AMC S.R.L., 80143 Napoli (NA) (IT)
(72) Inventor: MARANO, Angelo, 80143 Napoli (NA) (IT); MARANO, Fabio, 80143 Napoli (NA) (IT)
(74) Representative: Fiammenghi, Eva

(56) References cited:
- EP-A1- 3 733 381
- WO-A1-2015/086764
- FR-A1- 2 963 322

## Description

### Field of the art

The invention relates to the field of industrial thermo-sealing. Even more specifically, the invention is adapted to provide an innovative system for changing the modules of a chain conveyor in a thermo-welding machine having cells or alveolar cavities.

### Known art

Packaging machines are industrial machinery developed in recent years, especially in the food packaging sector. Thanks to the spread of large-scale retail trade, the need to protect foods and increase their shelf life, understood as a conservation period, has grown, as much as possible counteracting chemical, microbiological, physical, structural and sensorial changes which are in any case inevitable over time, in agreement with Parisi's First Law of Food Degradation. Thermo-welding machines are packaging machines for welding reeled films (polypropylene, polyester, or other plastic films) onto pre-formed plastic trays, or onto special molds to give particular shapes. The possibility of creating a vacuum inside the container and introducing inert gases makes them the most used packaging machines in food packaging. The high production capacity is also a distinctive feature of these machines which, thanks to the chain conveyor with alveoli, allow efficient management of the tray advancement.

The chain conveyor is in most cases constrained to a specific type of alveolar shape. The great variability of existing containers, for marketing reasons, makes it necessary to vary the shape in the conveyor chain lines of the thermo-welding machines. In particular in those with chain conveyor with alveoli, changing the alveolar shape is a big problem as it requires the replacement of the entire chain conveyor, unscrewing every single element to be able to replace it. This action not only requires many hours with disruption to production, but puts the operators at risk during the slat changing operations and is potentially dangerous; the risk of damage to the machine due to assembly errors is very high. To date, some solutions have been presented to avoid this problem, and in general inventions related to innovative thermo-welding systems, of which some examples follow.

One example is the object of patent application CN112810863A of C. XIAOMEI and G. MINHENG. The invention relates to the technical field of packaging machines, and describes a food packaging machine of the thermo-welding type. The machine consists of a belt conveyor, support frames, an upper roller, storage racks, a lower roller, a side plate, a transmission roller assembly, a pressure roller, a thermo-welding block and a thermo-welding assembly, the conveyor is connected to the conveyor belt, the two support frames are arranged on a frame at the upper end of the conveyor belt, the upper roller is positioned on the two support frames. The two storage racks are arranged on a frame in the lower part of the conveyor belt, and the lower roller is positioned on the two storage racks. According to the thermo-welding-type food packaging machine, when the conveyor belt and the conveyor run, the food on the conveyor can slide onto the films of the lower roller, the upper roller passes through the transmission roller assembly, and then passes through the pressure roller and the thermo-welding block, thereby the lateral edges of the two layers of film are subjected to thermo-welding in the thermo-welding block, under the operation of the pressure roller, the thermo-welded films move together with the conveyor belt, and finally, in the thermo-welding assembly, the films with the food are cut and subjected to thermo-welding.

Another example is the object of patent application WO2015086764A1 of A. ROSSINI. The invention relates to a packaging device. The packaging device comprises a welding and cutting station for welding a film on the edge of a tray and cutting said film, characterized in that it comprises a support surface comprising a plurality of housings housing a plurality of molds, said molds being of different dimensions and/or formats to accommodate trays of different dimensions and/or formats, said support surface being drivable to bring one of said molds at said welding and cutting station.

Another example is the object of patent application CN111645951A of L. CHEN and S. CHEN. The invention relates to a rapid thermo-welding machine for food packaging bags.

The rapid thermo-welding device comprises a base, a support plate is fixedly mounted to the upper end of the base, symmetrical limiting blocks are fixedly connected to the front end of the support plate, a dragging disk is rotatably connected to the upper parts of the support plate limiting blocks at the front ends of the support plate, a movable plate is slidingly connected between the limiting blocks, the upper end of the movable plate is fixedly connected with a guide frame extending to the guide disk, a telescopic column is fixedly installed at the front end of the movable plate, a spring rod is fixedly connected to the lower end of the telescopic column, and symmetrical limiting rods are fixedly installed at the upper end of the base. According to the rapid thermo-welding device for food packaging bags, the guide disk rotates to guide the guide frame, so that a thermo-welding plate moves up and down. The thermo-welding plate is moved by the telescopic column, and the pressing rods fix the thermo-welding plate, so as to obtain the effects of rapid thermo-welding, correct adjustment of the thermo-welding time according to the packaging materials, and improvement of the thermo-welding quality of the packaging bag.

Another example is the object of patent application CN208976599U of Z. MIN, L. SHUWEN and L. HUA. Universal thermoforming mold sets capable of being quickly changed. The invention claims a heating module comprising an upper matrix and a lower matrix. The upper matrix and the lower matrix are fixedly connected to the outlet of the heating equipment through relative heating plates. The mold core is developed independently and is fixed in the groove of the heating module by screws, and can be replaced by unscrewing the screws and extracting it.

The closest prior art to the present invention can be considered FR2963322 that discloses a slat exchange system in thermo-welding machines having cells or alveolar cavities, adapted for use on a thermo-welding machine with cells or alveoli, said system comprising: (i) at least one fixed slat part; (ii) at least one removable slat part having one or more shapes/profiles.

The inventions reported so far, purely by way of example and not exhaustively, are representative of the inventive-technological framework available to date.

The object of the present invention is to propose an innovative slat exchange system in thermo-welding machines having cells or alveolar cavities, capable of solving the technical problems linked to wear of the pins, to clamping which may not be perfect (with risk of damage of the machinery or of injury for the operators), as well as long lead times with considerable production stops, typical of the existing solutions for changing slats which involve dismantling the slat itself from the chain conveyor through bolted unions.

Even more advantageously, the system lends itself to being completely automated, thus allowing the slats on the chain conveyor to be changed through a robot and significantly speeding up the format change process with all the advantages deriving therefrom.

### Description of the invention

According to the present invention, a slat exchange system in thermo-welding machines having cells or alveolar cavities is provided which is capable of allowing the locking and unlocking of slats with alveoli along the chain conveyor, adapted to interchange the shapes in order to be able to weld different container models with the same machine.

The system comprises a slat divided into two parts, a fixed part connected to the chain conveyor with a bolted union, and a removable part on which the alveoli (or shapes) are present. The removable part can be unhooked from the fixed one through a hooking and unhooking mechanism and can be used on both of its sides, thus providing the possibility of using different alveoli on the same removable slat part.

The hooking and unhooking mechanism comprises a pin which inserts inside a symmetric groove made on the side of the removable slat part. The pin has a flat lower part and a slanting upper part, in order to allow locking the removable slat part simply by pressure, and preventing the accidental unhooking thereof. When the removable slat part is inserted by pressure, the pin snaps inside the symmetric groove, hooking it and a contrast bar, positioned on the bottom of the fixed slat part, provides support for the pressure. The pin is connected to a handle and a bar with spring. By moving the handle backwards (away from the slat) the pin then slides along the spring bar, and it is possible to remove the removable slat part. The spring bar can be replaced using magnetic, electromagnetic, hydraulic or other technology so as to have different types of machinery for automating the disassembly process.

The removable slat part is also designed so that it can house multiple modules which can be moved and recombined in order to allow for a greater number of alveoli (shapes) and to generally guarantee greater versatility.

The system comprises a check sensor which analyzes the alignment between the two parts of the slat. When these are misaligned, the thermo-welding machine is locked and a warning is sent. The sensor is also capable of measuring the distance between the edge of the fixed slat part and the end of the alveoli (or shapes). These distances are communicated to the IT system which manages the processes of the thermo-welding machine. In fact, when the thermo-welding machine is started, the IT system receives all the distances corresponding to the processes to be carried out and, if these are different from those measured by the check sensor, the IT management system locks the thermo-welding machine and sends a special warning. In fact, a difference between measurements is indicative of misalignments, or of slats mounted with the wrong set of shapes; in any case, locking the system prevents breakages and malfunctions.

The system thus designed can be easily automated by using a robot capable of unhooking the removable slat part, automatically manipulating the hooking and unhooking mechanism and positioning it in common racks or housing boxes. The robot instead hooks the removable slat part by simply pressing it against the slanting upper part of the pin which then moves back and allows the removable slat part to enter into position in the fixed part.

The release of the removable slat part, whether it is carried out manually by one or more workers, or in an automated manner, can be facilitated by using a profiled stick which is fixed in a position along the chain conveyor of the thermo-welding machine. The profiled stick automatically unlocks the hooking and unhooking mechanism when the slat slides forward; in fact, the handle slides along the profiled edge of the stick and reaches the unlocked position. Thereby the unlocked removable slat parts can be picked up by the robot or by a single operator; the length of the stick obviously determines how many slats are unlocked at the same time.

The advantages offered by the present invention are evident in the light of the description given up to now and will be even clearer thanks to the appended figures and the related detailed description.

### Description of the figures

The invention will be described hereinafter in at least one preferred embodiment by way of non-limiting example with the aid of the appended figures, in which:
- FIGURE 1 shows a general view of the slat exchange system in thermo-welding machines having cells or alveolar cavities 100 implemented on a thermo-welding machine having cells or alveolar cavities 10;
- FIGURE 2 shows two detail views of said slat exchange system in thermo-welding machines having cells or alveolar cavities 100;
- FIGURE 3 shows two detail views of said slat exchange system in thermo-welding machines having cells or alveolar cavities 100;
- FIGURE 4 shows a general view of said slat exchange system in thermo-welding machines having cells or alveolar cavities 100.

### Detailed description of the invention

The present invention will now be illustrated by way of a purely non-limiting or binding example, resorting to the figures which illustrate some embodiments with respect to the present inventive concept.

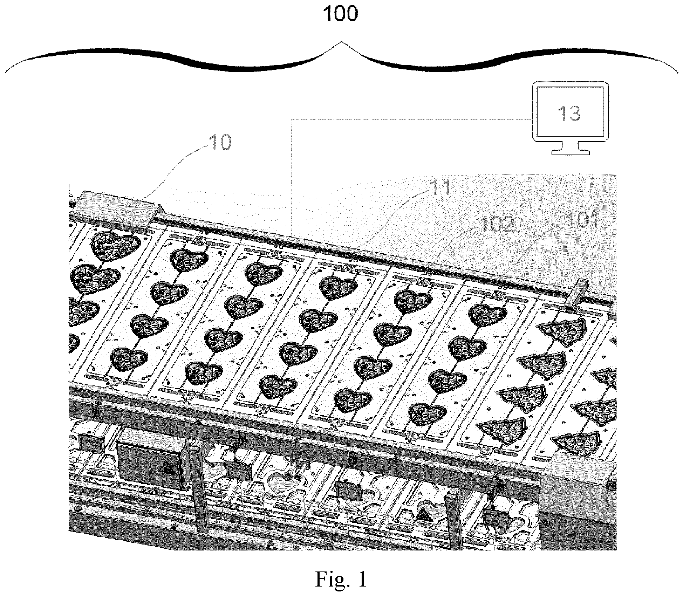

With reference to FIGs. 1, 2, 3 and 4 show general and detailed views of said slat exchange system in thermo-welding machines having cells or alveolar cavities 100 according to the present invention. In FIG. 1 as in the following description, the embodiment of the present invention currently considered the best is illustrated.

Said slat exchange system in thermo-welding machines having cells or alveolar cavities 100 adapted to be adopted on a thermo-welding machine having cells or alveolar cavities 10 having a chain conveyor 11, a transmission chain 12, an IT management apparatus 13, comprises at least one fixed slat part 101 with a contrast bar 105, at least one movable slat part 102 with shapes 103 and a symmetric groove 104, at least one hooking and unhooking mechanism 110 with at least one pin 111, at least one handle 112 and at least one bar with spring 113, a check sensor 120, a robot 130, a profiled stick 140.

Specifically, FIG. 1 shows a perspective view of said thermo-welding machine having cells or alveolar cavities 10 with said chain conveyor 11, on which various units of said fixed slat part 101 and said removable slat part 102 are arranged in series.

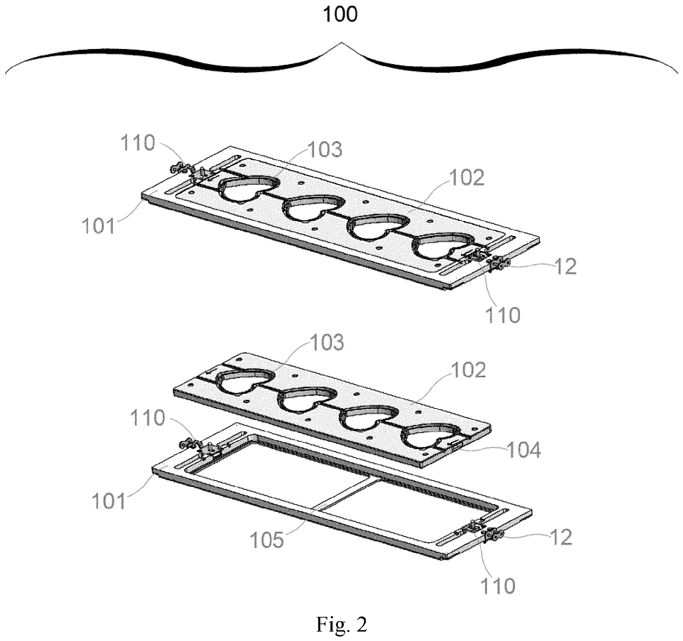

FIG. 2 shows a detail of said fixed slat part 101 and said removable slat part 102 in the constrained and released configurations, it is in fact possible to observe said removable slat part 102 inserted inside or released and shown on the outside of said fixed slat part, and it is possible to observe said hooking and unhooking mechanism 110 and said contrast bar 105.

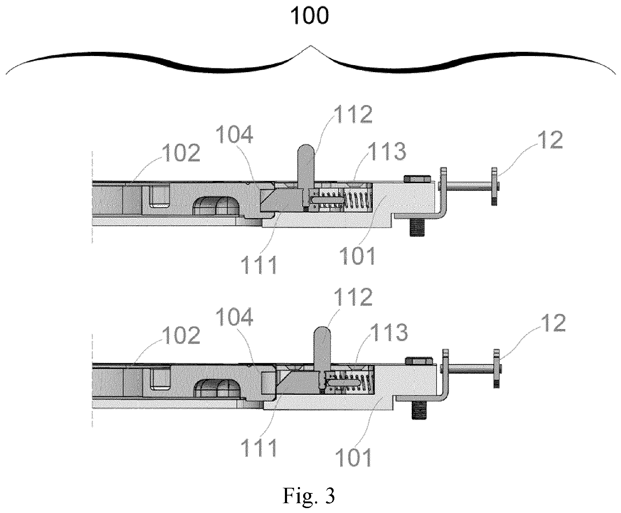

Said hooking and unhooking mechanism 110 is shown in detail in FIG. 3 in the locked and unlocked configuration. In the locked configuration, said pin 111 is located inside said symmetric groove 104 of said removable slat part 102 and said bar with spring 113 is in a rest condition. In the unlocked configuration, said pin 111 is moved back within the shape of said fixed slat part 101, applying force on said handle 112 and said bar with spring 113 is in a compressed condition, in this configuration said removable slat part 102 is released and can therefore be extracted from said fixed slat part 101.

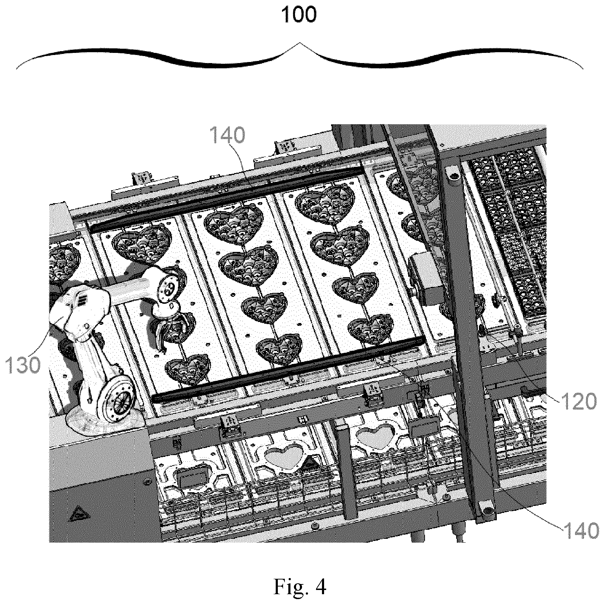

FIG. 4 lastly shows a perspective view of the portion of the thermo-welding machine having cells or alveolar cavities 10 where said check sensor 120, said robot 130, and two units of said profiled stick 140 are installed. The units of said profiled stick rod 140 ensure that said handle 112 of three units of said hooking and unhooking mechanism 110 slide simultaneously and position themselves in the unlocking configuration to subsequently allow said robot 130 to move said removable slat part 102.

Finally, it is clear that modifications, additions or variations which are obvious to a person skilled in the art can be made to the invention described up to now, without thereby departing from the scope of protection provided by the appended claims.

## Claims

1. A slat exchange system (100) in thermo-welding machines having cells or alveolar cavities, adapted for use on a thermo-welding machine (10) with cells or alveoli having a chain conveyor (11), a transmission chain (12), and an IT management apparatus (13), at least one fixed slat part (101) permanently connected to said chain conveyor (1 1);at least one removable slat part (102) having one or more shapes/profiles (103) and adapted to be reversibly hooked to and unhooked from said fixed slat part (101) in order to be exchanged with another removable slat part (102) having different shapes/profiles (103) and/or for maintenance reasons; wherein said removable slat part (102) is provided with a symmetric groove (104) arranged in central position within a wall thickness of said removable slat part (102); said system being **characterized in that** it comprises: at least one hooking and unhooking mechanism (110) installed on said fixed slat part (101), adapted for allowing hooking and unhooking of said removable slat part (102) in order to promote a swift exchange/replacement of the latter.

2. A slat exchange system (100) in thermo-welding machines having cells or alveolar cavities, according to the preceding claim 1, **characterized in that** said hooking and unhooking mechanism (110) includes:
- at least one pin (111) configured to be inserted in said symmetric groove (104) in order to engage with said removable slat part (102); said pin (111) being provided with a flat lower part in order to lock said removable slat part (102), and with a slanting upper part in order to allow a facilitated insertion of said removable slat part (102);
- at least one handle (112), connectable to said pin (111) and projecting beyond said fixed slat part (101) to ease its handiness;
- at least one bar with spring (113), adapted for allowing the backward sliding of said pin (111) when, using said handle (112), it is retracted within the profile of said fixed slat part (101); and adapted to put it again in an advanced position, pushing this pin (111) into said symmetric groove (104) of said removable slat part (102).

3. A slat exchange system (100) in thermo-welding machines having cells or alveolar cavities, according to the preceding claims 1 or 2, **characterized in that** said fixed slat part (101) comprises a holding bar, or counter pressure bar (105), in a lower zone, in order to provide a support during hooking of said removable slat part (102), as well as during the work/processing performed by said thermo-welding machine (10) with cells or alveoli.

4. A slat exchange system (100) in thermo-welding machines having cells or alveolar cavities, according to anyone of the preceding claims, **characterized in that** said removable slat part (102) is usable on both its sides, thus allowing the use of shapes/profiles (103) of its upper part, and the use of other shapes/profiles (103) on its lower part, while eliminating the need of employing another set of slats.

5. A slat exchange system (100) in thermo-welding machines having cells or alveolar cavities, according to anyone of the preceding claims, **characterized in that** said removable slat part (102) is configured in such a way as to allow the assembling of several modules (106) that are displaceable and combinable with one another, so as to permit the availability of a greater number of shapes/profiles (103) and ensure an increased versatility.

6. A slat exchange system (100) in thermo-welding machines having cells or alveolar cavities, according to anyone of the preceding claims, **characterized in that** it comprises a check sensor (120) adapted for analysing the alignment between said removable slat part (102) and said fixed slat part (101) and for verifying a correct positioning thereof; wherein, if said check sensor (120) detects an incorrect alignment between said removable slat part (102) and said fixed slat part (101), the thermo-welding machine with alveoli (10) is stopped and a warning is sent to prevent damage to the slat and/or the machine.

7. A slat exchange system (100) in thermo-welding machines having cells or alveolar cavities, according to the preceding claim 6, **characterized in that** said check sensor (120) is adapted for measuring a distance between an edge of said fixed slat part (101) and the ends of said shapes/profiles (103) and for communicating it to said IT management apparatus (13); wherein, at the start of the working, said IT management apparatus (13) receives the data regarding all distances between the edge of said fixed slat part (101) and the ends of said shapes/profiles (103), and if these differ from the distances measured by said check sensor (120), it stops said thermo-welding machine with alveoli (10) and sends a warning to the operator panel by communicating the actual format mounted on the chain conveyor; wherein said check sensor (120) is also adapted to prevent accidental damages when said removable slat part (102) has shapes/profiles (103) different from those needed for the process.

8. A slat exchange system (100) in thermo-welding machines having cells or alveolar cavities, according to anyone of the preceding claims, **characterized in that** it comprises a robot (130) adapted for unhooking said removable slat part (102), by automatically acting on said hooking and unhooking mechanism (110); wherein, said robot (130) is adapted for engaging/hooking said removable slat part (102) with/to said fixed slat part (101) by allowing said removable slat part (102) to reach its rest position inside said fixed slat part (101).

9. A slat exchange system (100) in thermo-welding machines having cells or alveolar cavities, according to anyone of the preceding claims, **characterized in that** it comprises a profiled stick (140) fixed in a position along said chain conveyor (11) of said thermo-welding machine with alveoli (10) and suited to automatically unlock said hooking and unhooking mechanism (110) by causing the sliding of said handle (112), in order to facilitate the manual operation of removal, or the removal by said robot (130), of said removable slat part (102); wherein, said profiled stick (140) has a length adapted for allowing the unhooking of one or more units of hooking and unhooking mechanisms (110).

10. A slat exchange system (100) in thermo-welding machines having cells or alveolar cavities, at least according to the preceding claim 2, **characterized in that** said pin (111) can be slid using said bar with spring (113) or by means of magnetic or electromagnetic, or hydraulic systems, and/or other kinds of systems.

11. A slat exchange system (100) in thermo-welding machines having cells or alveolar cavities, at least according to the preceding claim 2, **characterized in that** said hooking and unhooking system (110) can be implemented by different actuation systems, such as magnetic, pneumatic or electric.

## Patentansprüche

1. Lamellenwechselsystem (100) in Thermoschweißmaschinen mit Zellen oder alveolaren Hohlräumen, das für die Verwendung in einer Thermoschweißmaschine (10) mit Zellen oder Alveolen angepasst ist, mit einem Kettenförderer (11), einer Übertragungskette (12) und einer IT-Verwaltungsvorrichtung (13), zumindest einem feststehenden Lamellenteil (101), der permanent mit dem Kettenförderer (11) verbunden ist; zumindest einen entfernbaren Lamellenteil (102) mit einer oder mehreren Formen/Profilen (103), der so ausgelegt ist, dass er reversibel an dem feststehenden Lamellenteil (101) eingehakt und von diesem ausgehakt werden kann, um mit einem anderen entfernbaren Lamellenteil (102) mit anderen Formen/Profilen (103) und/oder aus Wartungsgründen ausgetauscht zu werden; wobei der entfernbare Lamellenteil (102) mit einer symmetrischen Nut (104) versehen ist, die in einer zentralen Position innerhalb einer Wanddicke des entfernbaren Lamellenteils (102) angeordnet ist; wobei das System **dadurch gekennzeichnet ist, dass** es aufweist: zumindest einen Einhak- und Aushakmechanismus (110), der an dem feststehenden Lamellenteil (101) installiert ist und so ausgelegt ist, dass er das Einhaken und Aushaken des entfernbaren Lamellenteils (102) ermöglicht, um einen schnellen Austausch/Ersatz des letzteren zu fördern.

2. Lamellenwechselsystem (100) in Thermoschweißmaschinen mit Zellen oder alveolaren Hohlräumen gemäß dem vorangehenden Anspruch 1, **dadurch gekennzeichnet, dass** der Ein- und Aushakmechanismus (110) enthält:
- zumindest einen Stift (111), der dazu ausgebildet ist, in die symmetrische Nut (104) eingesetzt zu werden, um mit dem entfernbaren Lamellenteil (102) in Eingriff zu kommen; wobei der Stift (111) mit einem flachen unteren Teil, um den entfernbaren Lamellenteil (102) zu verriegeln, und mit einem schrägen oberen Teil, um ein erleichtertes Einsetzen des entfernbaren Lamellenteils (102) zu ermöglichen, versehen ist;
- zumindest einen Griff (112), der mit dem Stift (111) verbunden werden kann und über den feststehenden Lamellenteil (101) hinausragt, um seine Handlichkeit zu erleichtern;
- zumindest eine Stange mit Feder (113), die so ausgelegt ist, dass sie das Zurückschieben des Stifts (111) ermöglicht, wenn dieser bei Verwendung des Griffs (112) in das Profil des feststehenden Lamellenteils (101) zurückgezogen wird; und dazu ausgelegt ist, ihn wieder in eine vorgeschobene Position zu bringen, indem sie diesen Stift (111) in die symmetrische Nut (104) des entfernbaren Lamellenteils (102) drückt.

3. Lamellenwechselsystem (100) in Thermoschweißmaschinen mit Zellen oder alveolaren Hohlräumen gemäß den vorangehenden Ansprüchen 1 oder 2, **dadurch gekennzeichnet, dass** der feststehende Lamellenteil (101) eine Haltestange oder Gegendruckstange (105) in einem unteren Bereich aufweist, um eine Stütze während des Einhakens des entfernbaren Lamellenteils (102) sowie während der Arbeit/Verarbeitung durch die Thermoschweißmaschine (10) mit Zellen oder Alveolen bereitzustellen.

4. Lamellenwechselsystem (100) in Thermoschweißmaschinen mit Zellen oder alveolaren Hohlräumen gemäß einem der vorangehenden Ansprüche, **dadurch gekennzeichnet, dass** der entfernbare Lamellenteil (102) auf seinen beiden Seiten verwendbar ist beiden Seiten verwendbar ist, wodurch die Verwendung von Formen/Profilen (103) seines oberen Teils und die Verwendung anderer Formen/Profile (103) an seinem unteren Teil ermöglicht wird, während die Notwendigkeit der Verwendung eines anderen Satzes von Lamellen entfällt.

5. Lamellenwechselsystem (100) in Thermoschweißmaschinen mit Zellen oder alveolaren Hohlräumen gemäß einem der vorangehenden Ansprüche, **dadurch gekennzeichnet, dass** der entfernbare Lamellenteil (102) so ausgebildet ist, dass er das Zusammenbauen mehrerer Module (106) ermöglicht, die verlagerbar und miteinander kombinierbar sind, um die Verfügbarkeit einer größeren Anzahl von Formen/Profilen (103) zu ermöglichen und eine erhöhte Vielseitigkeit zu gewährleisten.

6. Lamellenwechselsystem (100) in Thermoschweißmaschinen mit Zellen oder alveolaren Hohlräumen gemäß einem der vorangehenden Ansprüche, **dadurch gekennzeichnet, dass** es einen Prüfsensor (120) aufweist, der zum Analysieren der Ausrichtung zwischen dem entfernbaren Lamellenteil (102) und dem feststehenden Lamellenteil (101) und zum Überprüfen deren korrekter Positionierung angepasst ist; wobei die Thermoschweißmaschine mit Alveolen (10), wenn der Prüfsensor (120) eine falsche Ausrichtung zwischen dem entfernbaren Lamellenteil (102) und dem feststehenden Lamellenteil (101) feststellt, angehalten wird und eine Warnung gesendet wird, um eine Beschädigung der Lamelle und/oder der Maschine zu verhindern.

7. Lamellenwechselsystem (100) in Thermoschweißmaschinen mit Zellen oder alveolaren Hohlräumen gemäß dem vorangehenden Anspruch 6, **dadurch gekennzeichnet, dass** der Prüfsensor (120) zum Messen eines Abstands zwischen einem Rand des feststehenden Lamellenteils (101) und den Enden der Formen/Profile (103) und um ihn an die IT-Verwaltungsvorrichtung (13) zu übermitteln, angepasst ist; wobei die IT-Verwaltungsvorrichtung (13) zu Beginn der Arbeit die Daten bezüglich aller Abstände zwischen dem Rand des feststehenden Lamellenteils (101) und den Enden der Formen/Profile (103) empfängt und, wenn diese sich von den durch den Prüfsensor (120) gemessenen Abständen unterscheiden, die Thermoschweißmaschine mit Alveolen (10) anhält und eine Warnung an das Bediener-Panel sendet, indem sie das tatsächliche Format, das an dem Kettenförderer montiert ist, übermittelt; wobei der Prüfsensor (120) auch dazu angepasst ist, versehentliche Beschädigungen zu verhindern, wenn der entfernbare Lamellenteil (102) Formen/Profile (103) aufweist, die sich von denen, die für den Prozess benötigt werden, unterscheiden.

8. Lamellenwechselsystem (100) in Thermoschweißmaschinen mit Zellen oder alveolaren Hohlräumen gemäß einem der vorangehenden Ansprüche, **dadurch gekennzeichnet, dass** es einen Roboter (130) aufweist, der zum Aushaken des entfernbaren Lamellenteils (102) durch automatisches Einwirken auf den Einhak- und Aushakmechanismus (110) ausgebildet ist; wobei der Roboter (130) dazu angepasst ist, den entfernbaren Lamellenteil (102) mit dem feststehenden Lamellenteil (101) in Eingriff zu bringen/in diesen einzuhaken, indem er es dem entfernbaren Lamellenteil (102) ermöglicht, seine Ruheposition innerhalb des feststehenden Lamellenteils (101) zu erreichen.

9. Lamellenwechselsystem (100) in Thermoschweißmaschinen mit Zellen oder alveolaren Hohlräumen gemäß einem der vorangehenden Ansprüche, **dadurch gekennzeichnet, dass** es einen profilierten Stab (140) aufweist, der in einer Position entlang des Kettenförderers (11) der Thermoschweißmaschine mit Alveolen (10) befestigt ist und dazu geeignet ist, den Einhak- und Aushakmechanismus (110) durch Bewirken des Gleitens des Griffs (112) automatisch zu entriegeln, um die manuelle Betätigung des Entfernens des entfernbaren Lamellenteils (102) oder dessen Entfernen durch den Roboter (130) zu erleichtern; wobei der profilierte Stab (140) eine Länge aufweist, die so angepasst ist, dass sie das Aushaken von einer oder mehr Einheiten von Einhak- und Aushakmechanismen (110) ermöglicht.

10. Lamellenwechselsystem (100) in Thermoschweißmaschinen mit Zellen oder alveolaren Hohlräumen, zumindest gemäß dem vorangehenden Anspruch 2, **dadurch gekennzeichnet, dass** der Stift (111) unter Verwendung der Stange mit Feder (113) oder mittels magnetischer oder elektromagnetischer oder hydraulischer Systeme und/oder anderer Arten von Systemen verschoben werden kann.

11. Lamellenwechselsystem (100) in Thermoschweißmaschinen mit Zellen oder alveolaren Hohlräumen, zumindest gemäß dem vorangehenden Anspruch 2, **dadurch gekennzeichnet, dass** das Ein- und Aushaksystem (110) durch verschiedene Betätigungssysteme wie etwa magnetische, pneumatische oder elektrische implementiert werden kann.

## Revendications

1. Système de remplacement de latte (100) dans des machines de thermosoudage ayant des cellules ou des cavités alvéolaires, adapté pour être utilisé sur une machine de thermosoudage (10) à cellules ou alvéoles ayant un transporteur à chaîne (11), une chaîne de transmission (12) et un appareil de gestion informatique (13), au moins une partie de latte fixe (101) reliée en permanence audit transporteur à chaîne (11) ; au moins une partie de latte amovible (102) ayant un(e) ou plusieurs formes/profils (103) et adaptée pour être accrochée à ladite partie de latte fixe (101) et décrochée de celle-ci de manière réversible afin d'être remplacée par une autre partie de latte amovible (102) ayant des formes/profils (103) différents et/ou pour des raisons d'entretien ; dans lequel ladite partie de latte amovible (102) est dotée d'une rainure symétrique (104) agencée à une position centrale à l'intérieur d'une épaisseur de paroi de ladite partie de latte amovible (102) ; ledit système étant **caractérisé en ce qu'**il comprend : au moins un mécanisme d'accrochage et de décrochage (110) installé sur ladite partie de latte fixe (101), adapté pour permettre l'accrochage et le décrochage de ladite partie de latte amovible (102) afin de favoriser un remplacement/échange rapide de cette dernière.

2. Système de remplacement de latte (100) dans des machines de thermosoudage ayant des cellules ou des cavités alvéolaires, selon la revendication 1 précédente, **caractérisé en ce que** ledit mécanisme d'accrochage et de décrochage (110) comporte :
- au moins une broche (111) configurée pour être insérée dans ladite rainure symétrique (104) afin de venir en prise avec ladite partie de latte amovible (102) ; ladite broche (111) étant dotée d'une partie inférieure plate afin de verrouiller ladite partie de latte amovible (102) et d'une partie supérieure oblique afin de permettre une insertion facilitée de ladite partie de latte amovible (102) ;
- au moins une poignée (112), pouvant être reliée à ladite broche (111) et faisant saillie au-delà de ladite partie de latte fixe (101) pour faciliter sa manipulation ;
- au moins une barre à ressort (113), adaptée pour permettre le coulissement vers l'arrière de ladite broche (111) lorsqu'à l'aide de la poignée (112), celle-ci est rétractée à l'intérieur du profil de ladite partie de latte fixe (101) ; et adaptée pour être remise dans une position avancée, poussant cette broche (111) dans ladite rainure symétrique (104) de ladite partie de latte amovible (102).

3. Système de remplacement de latte (100) dans des machines de thermosoudage ayant des cellules ou des cavités alvéolaires, selon les revendications 1 ou 2 précédentes, **caractérisé en ce que** ladite partie de latte fixe (101) comprend une barre de retenue ou une barre de contre-pression (105), dans une zone inférieure, afin de fournir un support pendant l'accrochage de ladite partie de latte amovible (102), ainsi que pendant le travail/traitement réalisé par ladite machine de thermosoudage (10) à cellules ou alvéoles.

4. Système de remplacement de latte (100) dans des machines de thermosoudage ayant des cellules ou des cavités alvéolaires, selon l'une des revendications précédentes, **caractérisé en ce que** ladite partie de latte amovible (102) est utilisable sur ses deux côtés, permettant ainsi l'utilisation de formes/profils (103) sur sa partie supérieure et l'utilisation d'autres formes/profils (103) sur sa partie inférieure, tout en éliminant le besoin d'employer un autre jeu de lattes.

5. Système de remplacement de latte (100) dans des machines de thermosoudage ayant des cellules ou des cavités alvéolaires, selon l'une des revendications précédentes, **caractérisé en ce que** ladite partie de latte amovible (102) est configurée de manière à permettre l'assemblage de plusieurs modules (106) qui peuvent être déplacés et combinés les uns avec les autres, de façon à permettre la disponibilité d'un plus grand nombre de formes/profils (103) et à assurer une polyvalence accrue.

6. Système de remplacement de latte (100) dans des machines de thermosoudage ayant des cellules ou des cavités alvéolaires, selon l'une des revendications précédentes, **caractérisé en ce qu'**il comprend un capteur de contrôle (120) adapté pour analyser l'alignement entre ladite partie de latte amovible (102) et ladite partie de latte fixe (101) et pour vérifier un positionnement correct de celles-ci ; dans lequel, si ledit capteur de contrôle (120) détecte un alignement incorrect entre ladite partie de latte amovible (102) et ladite partie de latte fixe (101), la machine de thermosoudage à alvéoles (10) est arrêtée et un avertissement est envoyé pour empêcher un endommagement de la latte et/ou de la machine.

7. Système d'échange de latte (100) dans des machines de thermosoudage ayant des cellules ou des cavités alvéolaires, selon la revendication 6 précédente, **caractérisé en ce que** ledit capteur de contrôle (120) est adapté pour mesurer une distance entre un bord de ladite partie de latte fixe (101) et les extrémités desdit(e)s formes/profils (103) et pour la communiquer audit appareil de gestion informatique (13) ; dans lequel, au début du travail, ledit appareil de gestion informatique (13) reçoit les données concernant toutes les distances entre le bord de ladite partie de latte fixe (101) et les extrémités desdit(e)s formes/profils (103), et si celles-ci diffèrent des distances mesurées par le capteur de contrôle (120), celui-ci arrête ladite machine de thermosoudage à alvéoles (10) et envoie un avertissement au panneau de commande en communiquant le format réel monté sur le transporteur à chaîne ; dans lequel ledit capteur de contrôle (120) est également adapté pour empêcher des dommages accidentels lorsque ladite partie de latte amovible (102) a des formes/profils (103) différents de ceux nécessaires pour le processus.

8. Système de remplacement de latte (100) dans des machines de thermosoudage ayant des cellules ou des cavités alvéolaires, selon l'une des revendications précédentes, **caractérisé en ce qu'**il comprend un robot (130) adapté pour décrocher ladite partie de latte amovible (102), en agissant automatiquement sur ledit mécanisme d'accrochage et de décrochage (110) ; dans lequel, ledit robot (130) est adapté pour mettre en prise/accrocher ladite partie de latte amovible (102) avec/à ladite partie de latte fixe (101) en permettant à ladite partie de latte amovible (102) d'atteindre sa position de repos à l'intérieur de ladite partie de latte fixe (101).

9. Système de remplacement de latte (100) dans des machines de thermosoudage ayant des cellules ou des cavités alvéolaires, selon l'une des revendications précédentes, **caractérisé en ce qu'**il comprend une barre profilée (140) fixée dans une position le long dudit transporteur à chaîne (11) de ladite machine de thermosoudage à alvéoles (10) et appropriée pour déverrouiller automatiquement ledit mécanisme d'accrochage et de décrochage (110) en provoquant le coulissement de ladite poignée (112), afin de faciliter l'opération manuelle de retrait, ou le retrait dudit robot (130), de ladite partie de latte amovible (102) ; dans lequel ladite barre profilée (140) a une longueur adaptée pour permettre le décrochage d'une ou plusieurs unités de mécanismes d'accrochage et de décrochage (110).

10. Système de remplacement de latte (100) dans des machines de thermosoudage ayant des cellules ou des cavités alvéolaires, au moins selon la revendication 2 précédente, **caractérisé en ce que** ladite broche (111) peut coulisser en utilisant ladite barre à ressort (113) ou au moyen de systèmes magnétiques, électromagnétiques ou hydrauliques, et/ou d'autres types de systèmes.

11. Système de remplacement de latte (100) dans des machines de thermosoudage ayant des cellules ou des cavités alvéolaires, au moins selon la revendication 2 précédente, **caractérisé en ce que** ledit mécanisme d'accrochage et de décrochage (110) peut être mis en œuvre par différents systèmes d'actionnement, par exemple magnétiques, pneumatiques ou électriques.
